# EUROPEAN PATENT SPECIFICATION

(11) **EP 0 578 326 B1**
(45) Date of publication and mention of the grant of the patent: **22.01.1997**
(21) Application number: 93201987.0
(22) Date of filing: 07.07.1993
(51) Int. Cl.: B60G 5/04, B60G 11/62, B60G 7/04

(54) **Suspension with minimum transverse dimension and in particular for low bed vehicles**
Aufhängung mit minimalen Dimensionen und insbesondere für Tiefladefahrzeuge
Suspension à dimensions transversales minimales et en particulier pour véhicules à plateau de chargement surbaissé

(30) Priority: 10.07.1992 IT MI921682
(43) Date of publication of application: 12.01.1994
(73) Proprietor: SIRMAC OFFICINE MECCANICHE S.p.A., I-40010 Calcara (Bologna) (IT)
(72) Inventor: Venturi, Giancarlo, I-40050 Monte San Pietro (Bologna) (IT)
(74) Representative: Faraggiana, Vittorio, Dr. Ing.

(56) References cited:
- DE-A- 1 755 017
- FR-A- 2 156 290
- US-A- 1 731 962
- US-A- 2 330 482
- US-A- 2 404 794
- US-A- 2 740 622
- US-A- 2 920 903
- US-A- 2 952 455
- SOCIETY OF AUTOMOTIVE ENGINEERS 8 August 1977, VANCOUVER pages 1 - 15 , XP770685 HANS HAGEN 'AXLE LOCATING AND SUSPENSION SYSTEMS FOR COMMERCIAL VEHICLES' *

## Description

In the automotive construction art the problem of providing automotive vehicles with lowered bed is felt, i.e. vehicles in which the flatbed is at a height less than that of the wheel hubs. This is useful for example in the construction of buses having easier access to the inside.

The desire for a lowered bed conflicts obviously with the requirement of having in any case to include in the pitch between the vehicle wheels the normal mechanical members such as suspensions, transmission, etc., normally arranged under the bed. To seek to satisfy these conflicting requirements involves not a few problems and in particular for positioning of the suspensions.

For example, there have been proposed vehicles with lowered bed in which inside the vehicle are made side recesses for housing of the suspensions. Said recesses are produced by reducing the useful width of the cabin opposite the suspensions. One such solution involves however reduction of the useful internal volume and irregularity in the form of the cabin which involves large limits on the positioning of the interior furnishings.

The article "Axle Locating and Suspension Systems for Commercial Vehicles", Society of Automotive Engineers, 8 August 1977, Vancouver, and US-A-2 330 482 disclose suspension for high bed vehicles

The general purpose of the present invention is to obviate the above mentioned shortcomings by supplying an innovative suspension in which the transverse dimension of the vehicle is substantially contained in the thickness of the wheel and eliminating the need for large reductions of the useful space between the wheels.

In view of said purpose it has been sought to provide in accordance with the present invention a suspension with articulated quadrilateral having the features defined in the characterizing part of claim 1

To clarify the explanation of the innovative principles of the present invention and its advantages compared with the known art there is described below with the aid of the annexed drawings a possible embodiment by way of nonlimiting example applying said principles. In the drawings:
Fig. 1 shows a schematic side view of a suspension in accordance with the present invention,
Fig. 2 shows a plan view of the suspension of Fig. 1,
Fig. 3 shows a front view of the suspension of Fig. 1,
Fig. 4 shows a partial cross section view through plane of cut IV-IV of Fig. 3,
Fig. 5 shows a partial enlarged view through plane of cut V-V of Fig. 4,
Fig. 6 shows a partial enlarged view through plane of cut VI-VI of Fig. 3,
Figs. 7 and 8 show views similar to that of Fig. 1 and showing the suspension under different load stresses.

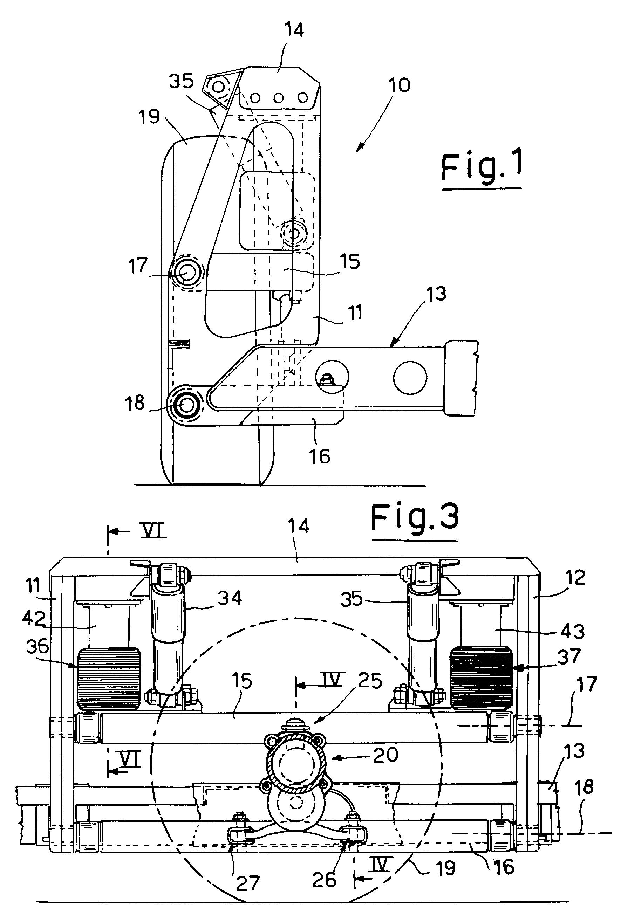

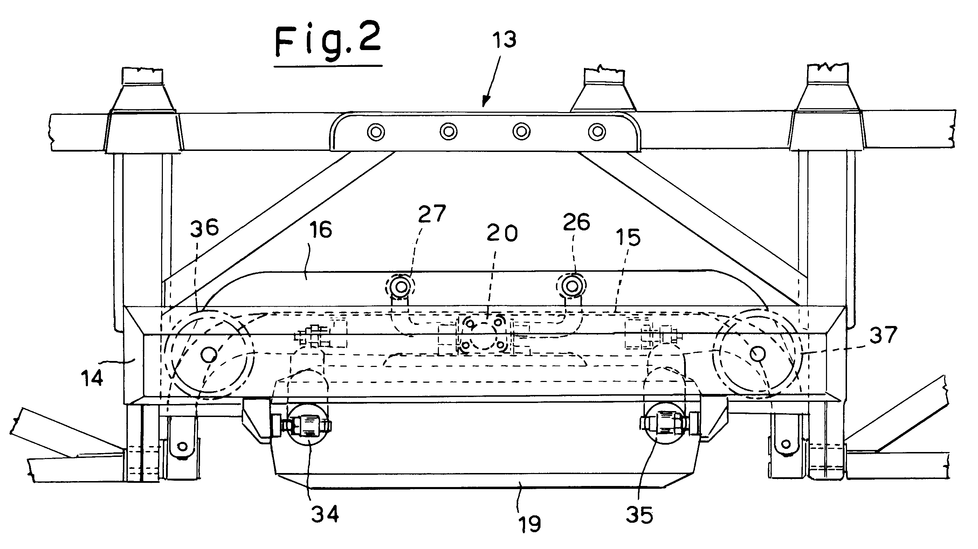

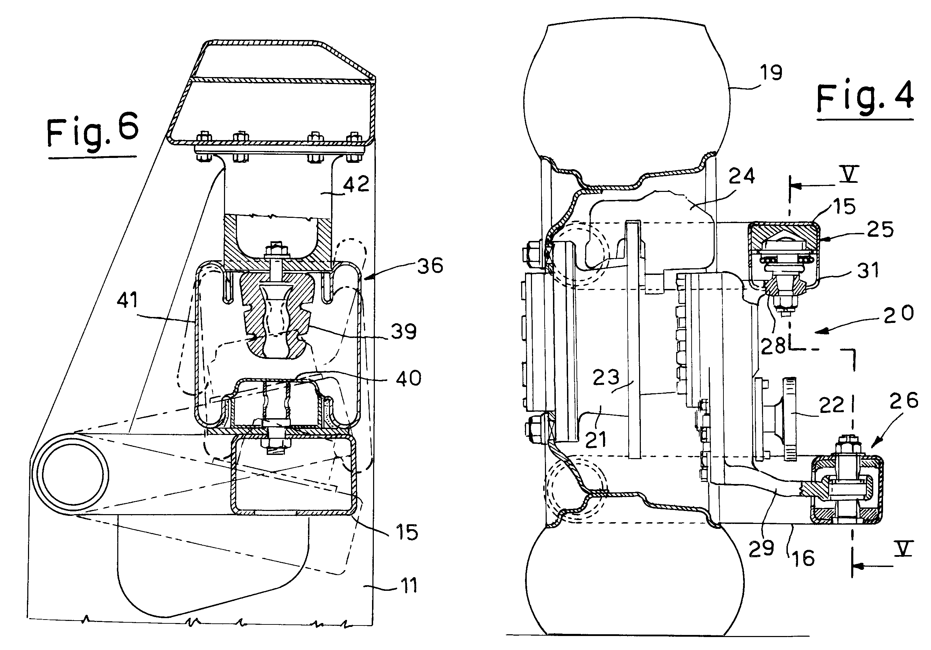

With reference to the Figs. Fig. 1 shows a side view of a suspension assembly indicated generally by reference number 10 and provided in accordance with the present invention. As may be seen in Figs. 2 and 3 as well the suspension assembly has an articulated quadrilateral and includes two facing side shoulders 11 12 connected to the bed or body 13 of the vehicle and connected above by a beam 14. The shoulders 11 and 12 support between them two superimposed U arms 15 and 16 hinged at the ends of the wings of the U to the shoulders in accordance with respective horizontal axes 17 and 18. Advantageously the shoulders 11 and 12 are connected to the frame near their lower end so as to permit provision of a low bed vehicle.

The horizontal axes are arranged toward the outer part of the frame and the wings of the U are turned opposite the centre line of the vehicle so that between the U arms 15 and 16 (of width greater than the diametrical dimension of the wheel) there is created a space or housing included between the shoulders to receive the wheel 19. As may be seen in Fig. 3 (where for the sake of clarity the wheel is removed and its space occupied is indicated by a dot and dash line) and in Fig. 4 between the U arms 15, 16 is arranged and anchored to the end parts of the arms an assembly 20 for support of the axle of the wheel 19. As may be seen in Fig. 4, advantageously the assembly 20 includes a motion input 22 connected to the hub 21 through a known internal gear transmission so as to be shifted downward in relation to the wheel able and permit provision of a lowered bed without interference from the transmission shaft. The hub 21 is substantially of the known art and can support for example a disk brake 23 with clamps 24.

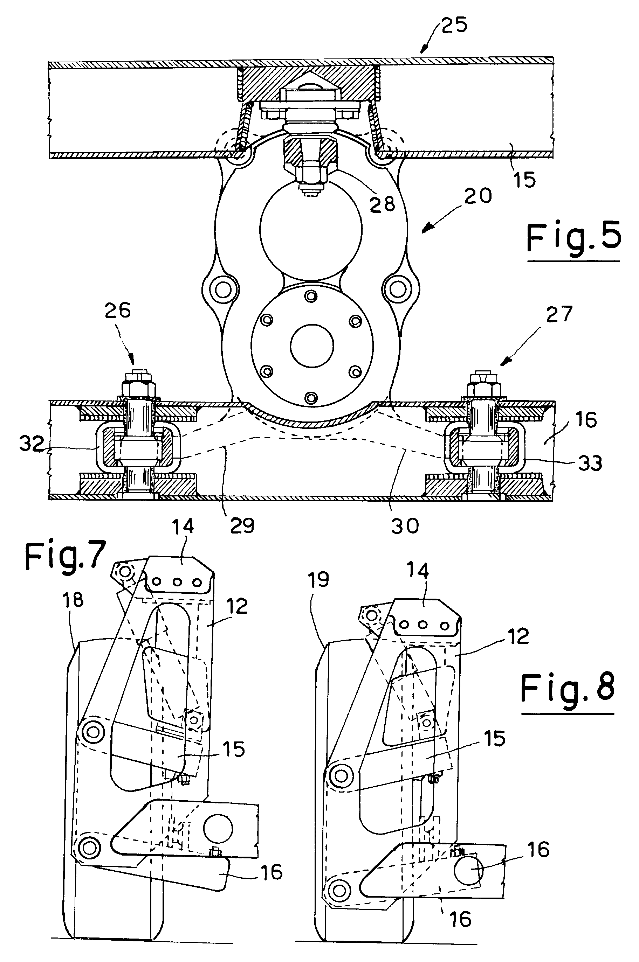

As may be seen in Fig. 5 the assembly 20 is fixed to the upper arm 15 by a spherical coupling 25 arranged in a vertical plane passing thrugh the wheel hub and to the lower arm 16 by means of a pair of spherical couplings 26, 27 arranged symmetrically in relation to said plane. In particular, the upper spherical coupling 25 is fixed to a bracket 28 projecting rearward from the assembly 20 to be inserted in the arm 15, which is in boxed construction, through a lower opening 31. The lower spherical couplings 26, 27 are fixed to L brackets 29, 30 projecting rearward in opposite directions from the assembly 20 to be inserted in the arm 16, which is also in boxed construction, through side openings 32, 33.

As may be seen in Figs. 1 and 3, between the upper arm 15 and the crosspiece 14 are connected two telescoping shock absorbers 34, 35 which are advantageously inclined and arranged at the sides of the wheel. Between the arm and the crosspiece are also present two elastic elements such as for example air springs 36, 37 fixed at the top to the crosspiece by means of supports 42, 43 to be arranged each between one end of the arm 15 and corresponding shock absorber.

The suspension can thus pass from the position of Fig. 1 (normal posture) to the end positions shown in Figs. 7 and 8 and representing respectively a full bump position downward and a full bump position upward.

By way or example, Fig. 6 shows a cross section of one of the two air springs, the other being of course identical.

As may be seen, the spring contains in its shell 41 a stop element consisting of a buffer 39 supported on the support 42 facing a striker element 40 fixed on the arm 15. Again in Fig. 6 are shown in broken lines the positions of the parts in relation to the full bump position movements of the suspension upward and downward. As may be seen, in the maximum upward travel position (corresponding to exceeding the maximum load of the vehicle) the rabbet 40 pushes against the buffer 39, deforming it elastically. The supports 42, 43 constitute pistons on which slide the membranes of the respective air springs.

It is now clear that the preset purposes have been achieved. The innovative form of the suspension which makes use of the space in the length of the vehicle instead of the width (as in conventional suspensions) permits achieving a transverse dimension of the vehicle substantially near that of the thickness of the wheel and thus permits maximum utilization of the space between the wheels even with lowered beds as is seen clearly for example in Fig. 1.

Naturally the above description of an embodiment applying the innovative principles of the present invention is given merely by way of example and therefore is not to be taken as a limitation of the patent right claimed here.

For example, the proportions of the parts can change depending on specific constructive and operating requirements.

In addition, although two symmetrical shock absorbers are shown, it is of course possible to use only one of them in an appropriate position, e.g. central.

## Claims

1. Suspension (10) with articulated quadrilateral for a motor vehicle wheel (19) in which the hub (21) of the wheel projects from a support assembly (20) connected by joints to a lower arm (16) and to an upper arm (15) hinged to the vehicle body, damped elastic reaction means (34,35,36, 37) being provided between the vehicle body and one of said aims (15,16),
characterised in that
- the vehicle body comprises first and second vertically extending shoulder members (11,12) arranged facing one-another at each side of the wheel (19)
- and in that each of said aims (15,16) has a substantially U-shaped configuration with a width greater than the width of the wheel (19) and is pivotally connected at each end to said first and second shoulder members respectively, whereby said arms (15,16) extend inwardly toward the vehicle centre.

2. Suspension in accordance with claim 1 characterized in that the supporting assembly (20) is connected to the end part of the upper arm (15) by a spherical joint (25) arranged on a vertical plane passing through the wheel axis and to the end part of the lower arm (16) by two spherical joints (26,27) arranged in spaced positions symmetrical to said plane.

3. Suspension in accordance with claim 1 characterized in that the shoulders (11,12) are connected at the top by a crossbeam member (14).

4. Suspension in accordance with claim 1 characterized in that the shoulder members 11,12 are connected to the vehicle bed (13) near their lower end.

5. Suspension in accordance with claim 3 characterized in that between the end of the upper arm (15) and the crosspiece (14) are arranged telescopic shock absorbers (34,35).

6. Suspension in accordance with claim 5 characterized in that the shock absorbers (34,35) are two, each being arranged near a wing of the upper arm (15).

7. Suspension in accordance with claim 5 characterized in that the shock absorbers (34,35) are arranged inclined toward the outside of the vehicle.

8. Suspension in accordance with claim 3 characterized in that between the crosspiece (14) and the end of the upper arm (15) are arranged elastic elements (36,37).

9. Suspension in accordance with claim 3 characterized in that between the crosspiece (14) and the upper arm (15) are present stop elements (39,40) for maximum upward movement of the upper arm (15).

10. Suspension in accordance with claims 8 and 9 characterized in that the elastic elements are air springs (36,37) containing stop buffers constituting said stop elements.

11. Suspension in accordance with claims 6 and 8 characterized in that the elastic elements (36,37) are two and each of them is arranged connected to the end of the upper arm (15) in a section between a shock absorber and a wing of the arm.

12. Suspension in accordance with claim 1 characterized in that the supporting assembly (20) includes a transmission of motion to the hub (21) of the wheel having motion input (22) arranged at a height lower than that of the hub (21).

## Patentansprüche

1. Gelenkviereckartige Aufhängung (10) für Fahrzeugräder (19), bei denen die Radnabe (21) von einer Abstützeinheit (20) vorsteht, die mittels Gelenken an einem unteren (16) und oberen Arm (15) verbunden ist, die am Fahrzeugkörper angelenkt sind, wobei zwischen dem Fahrzeugkörper und einem der Arme (15, 16) gedämpfte Federkraftmittel (34, 35, 36, 37) vorgesehen sind, dadurch gekennzeichnet, daß:
- der Fahrzeugkörper erste und zweite Schulterlemente (11, 12) umfaßt, die sich vertikal erstrecken und zueinander gegenüberliegend an jeder Seite des Rades (19) angeordnet sind,
- und dadurch, daß jeder der Arme (15, 16) eine im wesentlichen U-förmige Ausbildung mit einer gegenüber der Weite des Rades (19) größeren Breite besitzt und an jedem Ende jeweils an den ersten und zweiten Schulterelementen angelenkt ist, mittels derer sich die Arme (15, 16) innen in Richtung der Fahrzeugmitte erstrecken.

2. Aufhängung nach Anspruch 1, dadurch gekennzeichnet, daß die Abstützeinheit (20) mit dem Bodenteil des Oberarmes (15) mittels eines an einer vertikalen durch die Radachse gelegten Ebene angeordneten Kugelgelenkes (25) und mit dem Bodenteil des unteren Armes (16) mittels zwei Kugelgelenken (26, 27) verbunden ist, die in symmetrischen jeweils zu dieser Ebene beabstandeten Positionen angeordnet sind.

3. Aufhängung nach Anspruch 1, dadurch gekennzeichnet, daß die Schulterelemente (11, 12) oben durch einen Querträger (14) verbunden sind.

4. Aufhängung nach Anspruch 1, dadurch gekennzeichnet, daß Schulterelemente (11, 12) mit dem Flachboden (13) des Kraftfahrzeuges nahe ihrem unteren Ende verbunden sind.

5. Aufhängung nach Anspruch 3, dadurch gekennzeichnet, daß zwischen dem Boden des unteren Armes (15) und dem Querträger (14) teleskopartige Stoßdämpfer (34, 35) angeordnet sind.

6. Aufhängung nach Anspruch 5, dadurch gekennzeichnet, daß die Stoßdämpfer (34, 35) zwei sind, von denen jeder in der Nähe eines Flügels des oberen Armes (15) angeordnet ist.

7. Aufhängung nach Anspruch 5, dadurch gekennzeichnet, daß die Stoßdämpfer (34, 35) nach außen des Fahrzeuges geneigt angeordnet sind.

8. Aufhängung nach Anspruch 3, dadurch gekennzeichnet, daß zwischen Träger (14) und Boden des oberen Armes (15) Federelemente (36, 37) angeordnet sind.

9. Aufhängung nach Anspruch 3, dadurch gekennzeichnet, daß zwischen Querträger (14) und oberem Arm (15) Endanschlagelemente (39, 40) zur maximalen Bewegung des oberen Armes (15) nach oben angeordnet sind,.

10. Aufhängung nach Anspruch 8 und 9, dadurch gekennzeichnet, daß die Federelemente Luftfedern (36, 37) sind, die Endanschlagpuffer enthalten, die die genannten Endschlagelemente bilden.

11. Aufhängung nach Anspruch 6 und 8, dadurch gekennzeichnet, daß die Federelemente (36, 37) zwei sind, von denen jedes mit dem Boden des oberen Armes (15) in einem Abschnitt zwischen einem Stoßdämpfer und einem Flügel des Armes verbunden angeordnet ist.

12. Aufhängung nach Anspruch 1, dadurch gekennzeichnet, daß die Abstützeinheit (20) einen Antrieb der Radnabe (21) mit einer Bewegungseinleitung (22) umfaßt, die in einer unterhalb der Höhe der Radnabe (21) liegenden Höhe angeordnet ist.

## Revendications

1. Suspension (10) à quadrilatère articulé pour la roue (19) d'un véhicule automobile dans lequel le moyeu (21) de la roue fait saillie d'un ensemble support (20) relié par des joints à un bras inférieur (16) et à un bras supérieur (15) articulés sur le corps du véhicule, des moyens de réaction élastiques amortis (34, 35, 36, 37) étant prévus entre le corps du véhicule et l'un de ses bras (15, 16), caractérisée en ce que:
- le corps du véhicule comporte des premier et deuxième éléments formant épaulements (11, 12) arrangés en regard l'un de l'autre à chaque côté de la roue (19)
- et en ce que chacun desdits bras (15, 16) a une configuration essentiellement en "L" dont la largeur est supérieure à la largeur de la roue (19) et est monté à pivotement, à chacune de ses extrémités, respectivement sur lesdits premier et deuxième éléments formant épaulements, de telle sorte que lesdits bras (15, 16) s'étendent vers l'interieur, vers le centre du véhicule.

2. Suspension selon la revendication 1, caractérisée en ce que l'ensemble support (20) est relié à la partie extrême du bras supérieur (15) par un joint sphérique (25) disposé dans un plan vertical passant par l'axe de la roue et à la partie extrême du bras inférieur (16) par deux joints sphériques (26, 27) arrangés à des emplacements écartés, symétriques audit plan.

3. Suspension selon la revendication 1, caractérisée en ce que les épaulements (11, 12) sont reliés à leur partie supérieure par un élément formant traverse.

4. Suspension selon la revendication 1, caractérisée en ce que les éléments formant épaulements (11, 12) sont reliés à proximité de leur extrémité inférieure.

5. Suspension selon la revendication 3, caractérisée en ce que des amortisseurs de choc télescopiques (34, 35) sont disposés entre l'extrémité du bras supérieur (15) et la traverse (14).

6. Suspension selon la revendication 5, caractérisée en ce que les amortisseurs de choc (34, 35) sont deux, chacun étant arrangé à proximité d'une aile du bras supérieur (15).

7. Suspension selon la revendication 5, caractérisée en ce que les amortisseurs de choc (34, 35) sont disposés inclinés vers l'extérieur du véhicule.

8. Suspension selon la revendication 3, caractérisée en ce que des éléments élastiques (36, 37) sont arrangés entre la traverse (14) et l'extrémité du bras supérieur (15).

9. Suspension selon la revendication 3, caractérisée en ce que des éléments d'arrêt (39, 40) sont présents entre la traverse (14) et le bras supérieur (15), en vue de fixer le mouvement maximum vers le haut du bras supérieur (15).

10. Suspension selon les revendications 8 et 9, caractérisée en ce que les éléments élastiques sont des ressorts pneumatiques (36, 37) contenant des tampons d'arrêt formant lesdits éléments d'arrêt.

11. Suspension selon les revendications 6 et 8, caractérisée en ce que les éléments élastiques (36, 37) sont deux et chacun de ceux-ci est arrangé relié à l'extrémité du bras supérieur (15) à un endroit entre un amortisseur de choc et une aile du bras.

12. Suspension selon la revendication 1, caractérisée en ce que l'ensemble support (20) comporte une transmission de mouvement au moyeu (21) de la roue ayant une entrée de mouvement (22) placée à une hauteur plus basse que celle du moyeu (21).
